## Europäisches Patentamt

## European Patent Office

## Office européen des brevets

(19)

(11) **EP 0 987 571 A2**

(12) **EUROPÄISCHE PATENTANMELDUNG**

(43) Veröffentlichungstag:
22.03.2000 Patentblatt 2000/12

(51) Int. Cl.[7]: **G02B 6/255**

(21) Anmeldenummer: **99117214.9**

(22) Anmeldetag: **01.09.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **15.09.1998 DE 19842210**

(71) Anmelder:
**SIEMENS AKTIENGESELLSCHAFT**
**80333 München (DE)**

(72) Erfinder: **Zamzow, Bert**
**81371 München (DE)**

(54) **Verfahren zur Herstellung einer stoffschlüssigen Verbindung zwischen optischen Fasern**

(57)   Die Qualität der durch thermisches Spleißen erzeugten Verbindung zwischen Glasfasern hängt unter anderem auch von der Temperatur der Faserenden während des Spleißvorgangs ab. So führt sowohl eine zu hohe als auch eine zu niedrige Fasertemperatur zu einem Spleiß mit erhöhter Dämpfung.

Die durch thermisches Spleißen erzeugte Verbindung wirkt besonders schwach signaldämpfend, wenn man den die Fasertemperatur beeinflussende Schweiß-elektrodenstrom gemäß einer experimentell bestimmten und vom Verhältnis $T_2/T_1$ gemessener Strahlungsintensitäten abhängigen Funktion $f(T_2/T_1)$ steuert. Hierbei bezeichnen $T_i (i = 1,2)$ jeweils die von einem Faserende (1) in das gegenüberliegende Faserende (2) eingekoppelte Strahlungsintensität, wenn die Faserenden (1,2) hinsichtlich ihrer Kontur (transmittierte Intensität $T_1$) bzw. hinsichtlich ihrer Faserkerne (transmittierte Intensität $T_2$) ausgerichtet sind (vergleiche Figur 2b und Figur 2c).

Das Verfahren zum Verspleißen von Monomode- und Multimode-Glasfasern sowie Glasfaserbündeln kommt insbesondere in modernen, weitgehend vollautomatisch arbeitenden Spleißgeräten zum Einsatz.

FIG 2A

FIG 2B

FIG 2C

EP 0 987 571 A2

**Beschreibung**

**1. Einleitung und Stand der Technik**

Durch das als "thermisches Spleißen" bezeichnete Verfahren lassen sich sowohl Einmoden- als auch Mehrmoden-Glasfasern sowie Glasfaserbündel stoffschlüssig, dämpfungsarm und dauerhaft miteinander verbinden. Da das Spleißen als häufig durchzuführender Arbeitsschritt die Kosten für das Verlegen und die Montage eines Lichtwellenleiter-Kabels nicht unerheblich beeinflußt, wurden handliche und auch unter erschwerten Bedingungen vor Ort einsetzbare Geräte entwickelt, die alle für das Verschweißen der Glasfasern erforderliche Schritte vollautomatisch ausführen (siehe beispielsweise [1-5]). Die Dämpfung der mit einem solchen Gerät hergestellten Spleißverbindung hängt unter anderem von der exakten Ausrichtung der lichtführenden Faserkerne, der Qualität der Faserendflächen (Rauhigkeit, Bruchwinkel) und der vom Bediener gewählten oder durch das jeweilige Programm vorgegebenen Schweißparametern (Schweißzeit, Schweißstrom) ab. So kann insbesondere ein zu hohe oder zu niedrige Fasertemperatur während des Verschweißens zu einer Spleißverbindung führen, deren Dämpfung oberhalb des gewünschten Grenzwertes von beispielsweise D < 0,02 dB liegt.

**2. Gegenstand, Ziele und Vorteile der Erfindung**

Gegenstand der Erfindung ist ein Verfahren zur Herstellung einer stoffschlüssigen Verbindung zwischen optischen Fasern. Das Verfahren soll es dem Anwender, insbesondere dem Bediener eines Spleißgerätes ermöglichen, auch ohne nähere Kenntnis der Fasereigenschaften (Kerndurchmesser, Exzentrizität, Bruchwinkel, usw.) ein optimales Spleißergebnis zu erzielen. Diese Aufgabe wird erfindungsgemäß durch ein Verfahren mit den in Patentanspruch 1 angegebenen Merkmalen gelöst. Die abhängigen Ansprüche betreffen vorteilhafte Weiterbildungen und Ausgestaltungen des Verfahrens.

Das neue Verfahren läßt sich ohne weiteres in modernen Spleißgeräten anwenden, da man deren Aufbau nicht ändern und/oder sie durch weitere Komponenten ergänzen muß. Unabhängig von den jeweiligen Eigenschaften der zu verbindenden Fasern wird die Schweißtemperatur derart angepaßt, daß die erzeugte Spleißverbindung eine minimale Dämpfung aufweist. Der Anwender ist daher nicht mehr gezwungen, jeweils die optimalen Schweißparameter vor Ort durch zeitaufwendige Versuche selbst näherungsweise zu ermitteln.

**3. Zeichnungen**

Die Erfindung wird im Folgenden anhand der Zeichnungen näher erläutert. Es zeigen:

Figur 1    den schematischen Aufbau eines modernen, vollautomatisch arbeitenden thermischen Spleißgerätes;

Figur 2    die relative Lage der Enden zweier zu verschweißender optischer Fasern

a) nach ihrer Annäherung und Grobpositionierung
b) nach der Ausrichtung bezüglich ihrer Konturen und
c) nach der Ausrichtung bezüglich ihrer Faserkerne;

Figur 3    die Abhängigkeit des für die Herstellung einer optimalen Spleißverbindung erforderlichen Schweißelektrodenstromes in Abhängigkeit vom gemessenen Transmissionsverhältnis $T_2/T_1$.

**4. Beschreibung eines Ausführungsbeispiels**

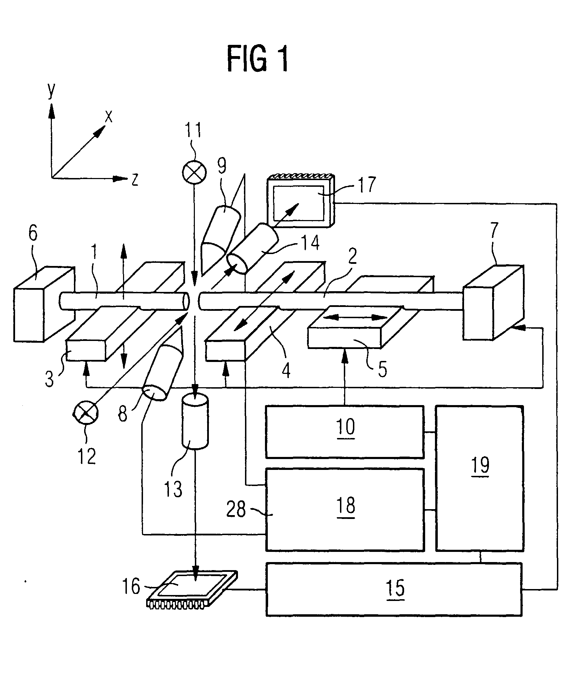

Das in Figur 1 schematisch dargestellte und unter der Bezeichnung X 60 vertriebene Spleißgerät der Siemens AG erlaubt das vollautomatische Verschweißen optischer Fasern (siehe [5]). Die mit Hilfe eines zwischen zwei Elektroden gezündeten Lichtbogens (elektrische Glimmentladung) erzeugte, im folgenden kurz als "Spleiß" bezeichnete stoffschlüssige Verbindung der optischen Fasern ist frei von Einschlüssen, wobei die durch den Spleiß hervorgerufene Dämpfung im Mittel etwa D= 0,02 - 0,03 dB beträgt.

Das Verbinden der jeweils aus einem Kern, einem Mantel ("Cladding") und einer, ein- oder mehrschichtigen Umhüllung ("Coating") bestehenden Einmoden- oder Mehrmoden-Glasfasern geschieht üblicher Weise durch das Ausführen der folgenden Verfahrensschritte:

a) Präparieren der Faserenden 1/2, d.h. sorgfältiges Entfernen der Faserumhüllungen, Reinigung der Faserenden 1/2 und Brechen der Fasern derart, daß die Faserendflächen annähernd senkrecht zur Faserlängsachse orientiert sind (Bruchwinkel < 0,8°; typischerweise 0,5°);

b) Einlegen und Fixieren der Faserenden 1/2 in den Halterungen des Spleißgeräts;

c) Annähern und Ausrichten der Faserenden 1/2 mittels hochpräziser Positioniereinheiten 3/4/5 unter Anwendung des sogenannten LID-Systems 6/7 (**L**ocal **I**njection and **D**etection) und/oder durch Videobildauswertung;

d) Reinigen der Faserendflächen durch kurzzeitiges Erhitzen der Faserenden 1/2;

e) Verschmelzen der Faserenden 1/2 durch Zünden eines elektrischen Lichtbogens zwischen zwei im Bereich der Faserenden 1/2 angeordneten Elektroden 8/9 und

f) Überprüfen der Qualität des Spleißes (Messung der Spleißdämpfung, Überprüfung der Zugfestigkeit).

Während die Verfahrensschritte a) und b) vom Bediener, also noch manuell ausgeführt werden müssen, laufen die unter c) bis f) angegebenen und weitere in [1, 2, 5] erwähnte Verfahrensschritte, insbesondere die Bestimmung des Bruchwinkels, der Qualität und des Verschmutzungsgrades der Faserendflächen programmgesteuert im Spleißgerät automatisch ab.

Zur Durchführung dieser Verfahrensschritte ist das Spleißgerät mit den folgenden Komponenten und Elementen ausgestattet:

- drei Positioniereinheiten 3/4/5 zur unabhängigen Verschiebung der jeweils in V-Nuten geführten Faserenden 1/2 in drei orthogonalen Raumrichtungen (x-, y- und z-Achse ≅ Faserlängsachse),
- eine die Stellelemente (Stellmotoren, pizoelektrische Aktuatoren) der Positioniereinheiten 3/4/5 ansteuernde Kontrolleinheit 10,
- einer aus einem optischen Sender 6 (Leuchtdiode, Biegekoppler) und einem optischen Empfänger 7 (Biegekoppler, Fotodiode, Verstärker) bestehenden Transmissionsmeßeinrichtung (LID-System, siehe beispielsweise [5]),
- zwei optischen Systemen zur Projektion der Konturen bzw. des Profils der beiden Faserenden 1/2 in zwei orthogonal zueinander orientierte Ebenen (x-z- bzw. y-z-Ebene), wobei die optischen Systeme jeweils eine Lichtquelle 11/12 (Leuchtdiode), eine Abbildungsoptik 13/14 und eine mit der Videoauswerteeinheit 15 verbundene die x-z- bzw. die y-z-Ebene definierende CCD-Kamera 16/17 aufweisen,
- einer Wärmequelle zum Erhitzen der Faserenden 1/2 auf die im Bereich zwischen etwa 1600 - 2000 °C liegende Schmelztemperatur, wobei die Wärmezufuhr im gezeigten Ausführungsbeispiel mittels einer zwischen zwei Elektroden 8/9 erzeugten und durch die Einheit 18 gesteuerte Glimmentladung erfolgt,
- eine eingangsseitig mit der Video-Auswerteeinheit 15 verbundene zentrale Steuerung 19, welche alle für das Spleißen notwendigen Schritte entsprechend dem gewählten Programm ausführt und überwacht sowie
- einen LCD-Monitor (nicht dargestellt).

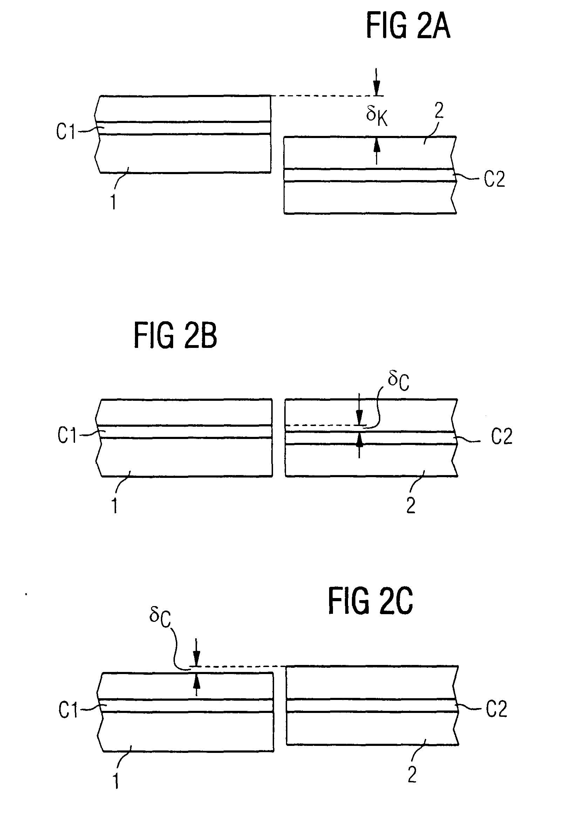

Nach dem Einlegen der Glasfasern in die Halterung des Spleißgeräts stehen sich deren Enden 1/2 im allgemeinen nicht ausgerichtet gegenüber. Wie in Figur 2 schematisch in Seitenansicht dargestellt, weisen dann sowohl die Außenkonturen der Faserenden 1/2 als auch deren Kerne C1/C2 einen nicht notwendigerweise gleich großen transversalen Versatz $\delta_K$ bzw. $\delta_C$ auf. Durch Auswertung der mit Hilfe der beiden CCD-Kameras 16/17 aufgenommenen Projektionen der Faserenden 1/2 in der x-z-Ebene bzw. der y-z-Ebene wird nun der Versatz $\delta_K$ der Außenkonturen gemessen. Anschließend verschiebt man die Faserenden 1/2 mit Hilfe der von der Kontrolleinheit 10 angesteuerten Positioniereinheiten 3/4/5 in transversaler Richtung, d.h. in Richtung der x- und y-Achse solange, bis die Außenkonturen der Faserenden 1/2 fluchten, deren transversaler Versatz $\delta_K$ also sowohl in x- als auch in y-Richtung zumindest näherungsweise verschwindet ($\delta_{Kx} \approx \delta_{Ky} \approx$ 0). Nach dieser als Feinpositionierung bezeichneten Ausrichtung liegen sich die Faserenden 1/2, wie in Figur 2b dargestellt, gegenüber. Deutlich zu erkennen ist der noch vorhandene, durch die exzentrische Lage der Faserkerne C1/C2 hervorgerufene Kernversatz $\delta_C$.

Um einen Spleiß mit möglichst niedriger Dämpfung zu erzeugen, müssen die Faserenden 1/2 daher noch hinsichtlich ihrer Kerne C1/C2 ausgerichtet, also der Kernversatz $\delta_C$ beseitigt oder zumindest minimiert werden. Dies geschieht unter Einsatz des LID-Systems, welches die von einer Leuchtdiode des Senders 6 emittierte IR-Strahlung der Wellenlänge 800 nm $\leq \lambda \leq$ 1600 nm, insbesondere $\lambda$ = 1300 nm oder $\lambda$ = 1550 nm, über den zugeordneten Biegekoppler in die linke Glasfaser einspeist und die Intensität der vom linken Faserende 1 in das rechte Faserende 2 eingekoppelten Strahlung mittels der aus einem zweiten Biegekoppler und einer Fotodioden-Verstärkereinheit bestehenden optischen Empfänger mißt. Die Faserenden 1/2 werden hierbei solange in transversaler Richtung verschoben, bis die im optischen Empfänger 7 des LID-Systems gemessene Strahlungsintensität ein Maximum erreicht, die Faserenden 1/2 somit die in Figur 2c dargestellte Position einnehmen (fluchtende und parallel zur z-Achse ausgerichtete Faserkerne C1/C2; kleiner, dem korrigierten Kernversatz $\delta_C$ entsprechender Konturversatz).

Anschließend werden die Faserenden 1/2 durch Zünden des elektrischen Lichtbogens zwischen den Elektroden 8/9 aufgeheizt, einander angenähert und miteinander verschmolzen. Während dieses Vorgangs mißt das LID-System 6/7 laufend den Lichtdurchgang über die Spleißstelle. Erreicht die im optischen Empfänger 7 gemessene Intensität ein Maximum, ist die optimale Schweißdauer erreicht und der Schweißvorgang wird automatisch beendet. Durch Anwendung dieser als **A**utomatic-**F**usion-Time-**C**ontrol bezeichneten Technik lassen sich die durch den Zustand der Elektroden 8/9 (nicht optimaler Abstand, Verschleiß usw.) und/oder durch Umwelteinflüsse (Feuchtigkeit, Luftdruck, Temperatur) hervorgerufenen, zu einer hohen Spleißdämpfung führenden Effekte weitgehend kompensieren.

Untersuchungen haben gezeigt, daß sich die Dämpfung, des durch Anwendung der AFC-Technik erzeugten Spleißes weiter verringern läßt, wenn man die Fasererwärmung, also die den Faserenden 1/2 zugeführte Energiemenge bzw. die Temperatur der Faserenden 1/2 während des Verschweißens abhängig

vom Verhältnis $T_2/T_1$ oder $T_1/T_2$ der vorzugsweise mit Hilfe des LID-Systems 6/7 gemessenen Intensitätswerte $T_1$ und $T_2$ vorgibt. Hierbei bezeichnet $T_1$ die Intensität der vom linken Faserende 1 in das rechte Faserende 2 eingekoppelten Strahlung, wenn die Faserenden 1/2 die in Figur 2b dargestellte Position einnehmen (bezüglich der Kontur ausgerichtete Faserenden 1/2; Konturversatz $\delta_K \approx 0$) und $T_2$ die Intensität der vom linken Faserende 1 in das rechte Faserende 2 eingekoppelten Strahlung, wenn die Faserenden 1/2 die in Figur 2c dargestellte Position einnehmen (bezüglich der Kerne C1/C2 ausgerichtete Faserenden 1/2; Kernversatz $\delta_C \approx 0$).

Zur Erzeugung eines dämpfungsarmen Spleißes ist dabei wie folgt zu verfahren:

1. Ausrichten der Faserenden 1/2 bezüglich ihrer Außenkonturen (vergleiche Figur 2b);
2. Messung der Intensität $T_1$ der vom optischen Sender 6 in die linke Glasfaser eingespeisten, über den zwischen den Faserenden 1/2 vorhandenen Spalt in die rechte Faser transmittierten und im optischen Empfänger 7 detektierten Strahlung;
3. Ausrichten der Faserenden 1/2 bezüglich ihrer Kerne C1/C2 (vergleiche Figur 2c);
4. Messung der Intensität $T_2$ der vom optischen Sender 6 in die linke Glasfaser eingespeisten, über den zwischen den Faserenden 1/2 vorhandenen Spalt in die rechte Faser transmittierten und im optischen Empfänger 7 detektierten Strahlung;
5. Zünden des Lichtbogens und Verschweißen der Faserenden 1/2, wobei die für ein optimales Spleißergebnis erforderliche Fasertemperatur über den zwischen den Elektroden 8/9 fließenden und vom Verhältnis $T_2/T_1$ abhängigen Schweißelektrodenstrom $I = f(T_2/T_1)$ vorgegeben wird.

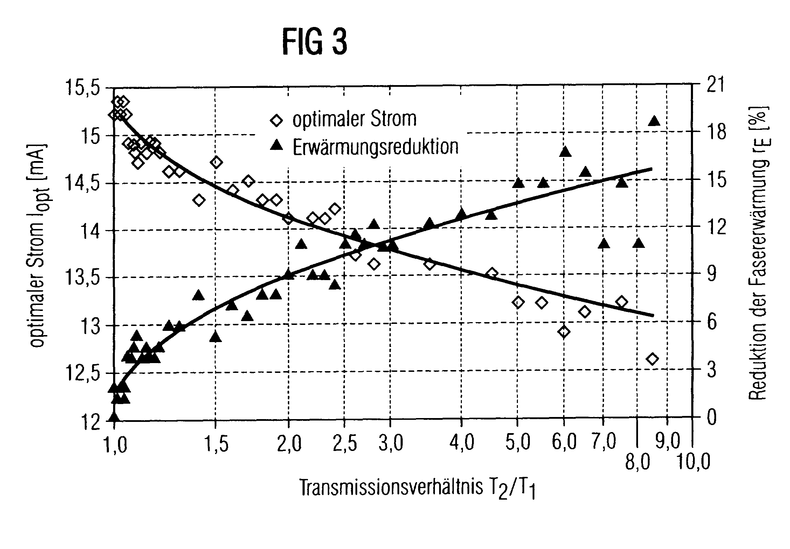

Um den funktionalen Zusammenhang zwischen dem Verhältnis $T_2/T_1$ der transmittierten Intensitäten und der optimalen Fasertemperatur zu ermitteln, wurden zahlreiche Versuche durchgeführt. In jedem dieser Versuche wurde jeweils in der oben angegebenen Weise (Schritte 1 - 5) verfahren, dabei der Elektrodenstrom (Schweißstrom I), also die Fasertemperatur variiert und das Verhältnis $T_2/T_1$ sowie die Dämpfung des erzeugten Spleißes gemessen. Das Ergebnis dieser Versuche zeigt Figur 3. Als offene Rauten sind jeweils derjenige Elektrodenstrom $I_{OPT}$ dargestellt, der für ein festes Intensitätsverhältnis $T_2/T_1$ zu einem optimalen Spleißergebnis, d.h. zu einem Spleiß mit minimaler Dämpfung führte. Die Abhängigkeit des optimalen Stromes $I_{OPT}$ vom Verhältnis $T_2/T_1$ läßt sich in guter Näherung durch die Funktion

$$I_{OPT} = a - b \cdot \sqrt{\ln(T_2/T_1)} \qquad (1)$$

beschreiben, wobei die Konstanten a und b den Wert a = 15,5 mA bzw. b = 1,665 mA besitzen.

Der optimale Schweißelektrodenstrom beträgt also beispielsweise $I_{OPT} = a = 15,5$ mA, wenn man zwei optische Fasern mit jeweils konzentrisch bezüglich des Mantels liegenden Kernen C1/C2 thermisch verschweißen will. In diesem speziellen Fall ist nach der Ausrichtung der Faserenden 1/2 bezüglich der Kontur kein Kernversatz $\delta_C$ vorhanden (vergleiche Figur 2b, 2c), so daß das LID-System 6/7 die Intensitäten $T_1$ und $T_2 = T_1$ mißt, die Größe $\ln(T_2/T_1)$ somit den Wert $\ln(T_1/T_2) = 0$ annimmt.

Die für die Erzeugung eines dämpfungsarmen Spleißes erforderliche optimale Fasererwärmung läßt sich beispielsweise über folgende Parameter beeinflussen:

- Dauer der Wärmeeinwirkung auf die Faserenden 1/2 (Schweißzeit);
- Dauer der Faservorerwärmung (Vorschweißzeit);
- Dauer der Faserabkühlung und
- Höhe der Temperatur der Faserenden 1/2.

Die Höhe der Fasertemperatur kann man wiederum über

- den Elektrodenstrom (Wärmequelle: Glimmentladung)
- die Menge oder den Volumenstrom des einem als Wärmequelle dienenden Brenner zugeführten Gases;
- das Gasmischungsverhältnis (Wärmequelle: Gasbrenner) oder die Strahlungsintensität (Wärmequelle: Laser)

vorgeben bzw. steuern.

Die oben beschriebenen Versuchsergebnisse zur Bestimmung des optimalen Elektroden- bzw. Schweißstromes $I_{OPT}$ lassen sich auch auf andere Arten der Fasererwärmung (Gasbrenner, Laser) übertragen. Für die optimale Fasererwärmung gilt dann:

$$E_{OPT} = E_{MAX} (1 - r_E). \qquad (2)$$

In Gleichung (2) bezeichnet $r_E$ die durch

$$r_E := c \cdot \sqrt{\ln(T_2/T_1)} \qquad (3)$$

definierte und im folgenden "Reduktionsfaktor" bezeichnete Größe ($c \approx 0,11$) und $E_{MAX}$ den dem maximalen Elektrodenstrom $I_{MAX}(T_2/T_1 = 1) = a$ entsprechenden Parameter (Gasmenge, Gasvolumenstrom, Gasmischungsverhältnis, Strahlungsintensität der Laserquelle), welcher zu einem Spleiß minimaler Dämpfung führt, wenn das gemessene Intensitätsverhältnis den Wert $T_2/T_1 = 1$ annimmt. Die Prozentwerte des Reduktionsfaktors $r_E$ in Abhängigkeit vom Intensitätsverhältnis $T_2/T_1$ sind in Figur 3 als schwarze Dreiecke dargestellt.

Dient beispielsweise ein Laser als Wärmequelle und nimmt das Intensitätsverhältnis beispielsweise den Wert $T_2/T_1 = 4$ an, so beträgt die zu einem Spleiß minimaler Dämpfung führende Laserintensität

$$I_{OPT}^L = I_{MAX}^L(T_2/T_1 := 1) \cdot (1-0,13) \qquad (4)$$

d.h., man muß die Laserintensität $I^L(T_2/T_1 = 1)$ für das zu $T_2/T_1 = 4$ bestimmte Verhältnis um 13% verringern.

## 5. Ausgestaltungen und Weiterbildungen

Die Erfindung beschränkt sich selbstverständlich nicht auf die oben beschriebenen Ausführungsbeispiele. So ist es ohne weiteres möglich,

- auch Glasfaserbündel, d.h. mehrere, bezüglich ihrer Längsachse ausgerichtete und nebeneinander angeordnete Glasfasern („Glasfaserbändchen") in entsprechender Weise zu verschweißen;
- die Ausrichtung der Faserenden 1/2 durch transversale Verschiebung nur einer der beiden Faserenden 1/2 zu bewerkstelligen;
- nicht das LID-System 6/7, sondern eine separate Transmissionsmeßeinrichtung zu verwenden;
- Licht der Wellenlänge 700 nm $\leq \lambda \leq$ 900 nm in die optischen Fasern einzukoppeln und
- die Elektroden 8/9 des Spleißgeräts durch einen Gasbrenner (siehe beispielsweise [6]) oder einen Laser zu ersetzen.

## 6. Literatur

[1] telecom report 19 (1996), Heft 1; Seiten 39 - 42
[2] telecom report 18 (1995), Heft 3; Seiten 136 - 139
[3] telecom report 13 (1990), Heft 2; Seiten 62 - 65
[4] telecom report 9 (1986), Heft 3; Seiten 197 - 201
[5] ICCS and Future- Link; Katalog 1998; Siemens-Communication-Cabel Networks; Seiten 107 - 116.
[6] DE 42 35 924 C2

## Patentansprüche

1. Verfahren zur Herstellung einer stoffschlüssigen Verbindung zwischen optischen Fasern durch Ausführen der folgenden Schritte:

   a) Annähern der Enden (1,2) einer ersten und einer zweiten optischen Faser;
   b) Ausrichten der beiden Fasernenden (1,2) derart, daß der Versatz ($\delta_K$) ihre Außenkonturen minimal ist;
   c) Einkoppeln von elektromagnetischer Strahlung in die erste optische Faser und Messung einer ersten Intensität ($T_1$) der von der ersten optischen Faser über den zwischen den Faserenden (1,2) vorhanden Spalt in die zweite optische Faser transmittierten Strahlung;
   d) Ausrichten der Faserenden (1,2) derart, daß ihre Kerne (C1, C2) annähernd auf derselben Achse liegen;
   e) erneutes Einkoppeln von elektromagnetischer Strahlung in die erste optische Faser und Messung einer zweiten Intensität ($T_2$) der von der ersten optischen Faser über den zwischen den Faserenden (1,2) vorhanden Spalt an die zweite optische Faser transmittierten Strahlung und
   f) Erhitzen und in Kontakt bringen der Faserenden (1,2), wobei die den Faserenden (1,2) zugeführte Energie oder die Höhe der Temperatur der Faserenden (1,2) vom Verhältnis der gemessenen ersten und zweiten Intensität ($T_1$, $T_2$) abhängt.

2. Verfahren nach Anspruch 1,
   **dadurch gekennzeichnet,**
   daß die Faserenden (1/2) in einem zwischen zwei Elektroden (8, 9) brennenden elektrischen Lichtbogen, mittels eines Gasbrenners oder durch Bestrahlung mit Laserlicht erhitzt werden, wobei die Stärke des Elektrodenstromes, die Menge, die Durchflußrate oder die Zusammensetzung des dem Brenner zugeführten Gases oder die Intensität des Laserlichtes vom Verhältnis der gemessenen Intensitäten ($T_1$, $T_2$) abhängen.

3. Verfahren nach Anspruch 1 oder 2,
   **dadurch gekennzeichnet,**
   daß ein die zugeführte Energiemenge oder die Höhe der Temperatur beeinflussender Parameter (P) in Abhängigkeit vom Verhältnis der gemessenen Intensitäten ($T_1$, $T_2$) vorgegeben wird.

4. Verfahren nach Anspruch 3,
   **dadurch gekennzeichnet,**
   daß der die zugeführte Energiemenge oder die Höhe der Temperatur beeinflussende Parameter (P) gemäß der Beziehung

$$I_{OPT} = a - b \cdot \sqrt{\ln(T_2/T_1)} \qquad (1)$$

   von den gemessenen Intensitäten $T_1$ und $T_2$ und den Konstanten a und b abhängt.

5. Verfahren nach Anspruch 4,
   **dadurch gekennzeichnet,**
   daß die Konstante a dem Wert des Parameters (P) entspricht, bei dem das Verhältnis $T_2/T_1$ den Wert $T_2/T_1 = 1$ annimmt und die Dämpfung der erzeugten stoffschlüssigen Verbindung minimal ist.

6. Verfahren nach einem der Ansprüche 1 bis 5,

**dadurch gekennzeichnet,**
daß die Faserendflächen vor Ausführung des Verfahrensschrittes f) durch kurzzeitiges Erhitzen der Faserenden (1, 2) gereinigt werden.

7. Verfahren nach einem der Ansprüche 1 bis 6,
**dadurch gekennzeichnet,**
daß elektromagnetische Strahlung während des Verschmelzens der optischen Fasern an einer vor der entstehenden stoffschlüssigen Verbindung liegenden Stelle in die erste optische Faser eingekoppelt und an einer in Strahlrichtung hinter der entstehenden stoffschlüssigen Verbindung liegenden Stelle wieder ausgekoppelt wird und daß das Erhitzen der Faserenden (1, 2) beendet wird, wenn die Intensität der ausgekoppelten Strahlung ein Maximum erreicht.

8. Verfahren nach einem der Ansprüche 1 bis 7,
**dadurch gekennzeichnet,**
daß elektromagnetische Strahlung mittels eines Biegekopplers ein- oder ausgekoppelt wird.

9. Verfahren nach Anspruch 8,
**dadurch gekennzeichnet,**
daß elektromagnetische Strahlung der Wellenlänge 800 nm $\leq \lambda \leq$ 1600 nm eingekoppelt wird.

10. Verfahren nach einem der vorhergehenden Ansprüche,
**dadurch gekennzeichnet,**
daß die Faserenden (1, 2) auf eine im Bereich von 1600°C bis 2000°C liegende Temperatur erhitzt werden.

# FIG 1

## FIG 2A

C1

$\delta_K$

2

C2

1

## FIG 2B

$\delta_C$

C1

C2

1

2

## FIG 2C

$\delta_C$

C1

C2

1

2

## FIG 3

Reduktion der Fasererwärmung rE [%]

optimaler Strom Iopt [mA]

Transmissionsverhältnis T2/T1

◇ optimaler Strom
▲ Erwärmungsreduktion